# EUROPEAN PATENT APPLICATION

(11) **EP 4 836 307 A1**
(43) Date of publication of application: **04.11.2026**
(21) Application number: 26168084.7
(22) Date of filing: 26.03.2026
(51) Int. Cl.: H04B 5/24, H02J 50/80, H04B 5/26, H04B 5/48, H04B 5/79

(54) **A DEVICE FOR COMMUNICATING WITH NEAR FIELD COMMUNICATION CARDS**

(30) Priority: 28.04.2025 CN 202510549323
(71) Applicant: NXP USA, Inc, Austin, TX 78735 (US)
(72) Inventor: He, Changyu, 5656AG Eindhoven (NL); Luo, Zhixin, 5656AG Eindhoven (NL); Neophytou, Kyriakos, 5656AG Eindhoven (NL); Liebisch, Gregor, 5656AG Eindhoven (NL); Li, Hui, 5656AG Eindhoven (NL)
(74) Representative: Schwarzweller, Thomas

(57) **Abstract**

A device comprising: a transmitter configured to transmit a first polling loop with a first field strength and at least a second polling loop with a different second field strength for at least a part of its duration; a receiver configured to receive a first response in reply to the first polling loop from a near field communication, NFC, responder and a second response in reply to the at least second polling loop from the NFC responder; and a controller configured to: based on one or both of: (i) an amplitude difference between an amplitude of the first and second responses, relative to an amplitude threshold; and (ii) a phase difference between a phase of the first and second responses, relative to a phase threshold, determine whether the NFC responder comprises a physical NFC card or an electronic device emulating an NFC card.

## Description

### Field

The present disclosure relates to a device for communicating with near field communication, NFC, cards and, in particular, a device for distinguishing between a physical NFC card and a virtual NFC card generated by an electronic device, such as a smart phone. It also relates to a wireless charger including the device.

### Background

Virtual NFC cards may be generated by an electronic device, such as a smart phone, to emulate a physical NFC card.

### Summary

According to a first aspect of the present disclosure there is provided a device comprising:
a transmitter configured to transmit a first polling loop comprising plural polling commands with a first field strength and at least a second polling loop comprising plural polling commands, wherein the second polling loop is transmitted with a second field strength different to the first field strength for at least a part of a duration of the second polling loop;
a receiver configured to receive a first response in reply to the first polling loop from a near field communication, NFC, responder and a second response in reply to the at least second polling loop from the NFC responder; and
a controller configured to:
   based on one or both of: (i) an amplitude difference between an amplitude of the first response and an amplitude of the second response, relative to an amplitude threshold; and (ii) a phase difference between a phase of the first response and a phase of the second response, relative to a phase threshold, determine whether the NFC responder comprises a physical NFC card or an electronic device emulating an NFC card.

**In** one or more embodiments, the controller is configured to,
based on the amplitude difference between the amplitude of the first response and the amplitude of the second response being greater than the amplitude threshold, determine that the NFC responder comprises the electronic device emulating an NFC card; and
based on the amplitude difference between the amplitude of the first response and the amplitude of the second response being less than the amplitude threshold, determine that the NFC responder comprises the physical NFC card.

**In** one or more embodiments, the controller is configured to,
based on the phase difference between the phase of the first response and the phase of the second response being greater than the phase threshold, determine that the NFC responder comprises the electronic device emulating an NFC card; and
based on the phase difference between the phase of the first response and the phase of the second response being less than the phase threshold, determine that the NFC responder comprises the physical NFC card.

**In** one or more embodiments, the device comprises wireless charging circuitry and wherein the wireless charging circuitry is controlled based on the determination of whether the NFC responder comprises the physical NFC card or the electronic device emulating an NFC card.

**In** one or more embodiments, the first response and the second response comprise an Answer to Request, ATQA, signal.

**In** one or more embodiments, the first response and the second response comprise an anti-collision signal generated as part of an anti-collision algorithm.

In one or more embodiments, the receiver is configured to determine In-phase, I, and Quadrature, Q, components of the first response and I and Q components of the second response, and
wherein the controller is configured to determine a first phase angle based on one of the I and Q components of the first response and a second phase angle based on the one of the I and Q components of the second response, wherein the phase difference is based the difference between the first phase angle and the second phase angle.

In one or more embodiments, the transmitter is configured to transmit a third polling loop comprising plural polling commands with a third field strength, wherein the third polling loop is transmitted with a third field strength different to the first field strength for at least a part of a duration of the third polling loop; and
wherein the determination of whether the NFC responder comprises a physical NFC card or an electronic device emulating an NFC card is further based on one or both of (i) an amplitude difference between an amplitude of the first response and an amplitude of the second response and/or third response, relative to an amplitude threshold; and (ii) a phase difference between a phase of the first response and a phase of the second response and/or third response, relative to a phase threshold.

In one or more embodiments, the second polling loop is transmitted with the second field strength different to the first field strength for at least an initial part of the duration of the second polling loop.

In one or more embodiments, the transmitter is configured to transmit the second polling loop having the second field strength for the initial part of the second polling loop and a greater field strength for a latter part of the second polling loop.

In one or more embodiments, the receiver is configured to receive at least the second response during the latter part of the second polling loop.

In one or more embodiments, the controller is configured to inhibit the activation of or deactivate the wireless charging circuitry based on the determination that the NFC responder comprises the physical NFC card.

In one or more embodiments, wherein one or both of:
the controller is configured to inhibit the activation of or deactivate the wireless charging circuitry based on the determination that the NFC responder comprises the physical NFC card; or
the controller is configured to activate, or not prevent the activation of, the wireless charging circuitry based on the determination that the NFC responder comprises the electronic device emulating an NFC card.

According to a second aspect of the disclosure, we provide method of operating a device comprising:
transmitting, by a transmitter, a first polling loop comprising plural polling commands with a first field strength;
receiving, by a receiver, a first response in reply to the first polling loop from a near field communication, NFC, responder;
transmitting, by the transmitter, a second polling loop comprising plural polling commands, wherein the second polling loop is transmitted with a second field strength different to the first field strength for at least a part of a duration of the second polling loop;
receiving, by a receiver, a second response in reply to the at least second polling loop from the NFC responder; and
determining, by a controller, whether the NFC responder comprises a physical NFC card or an electronic device emulating an NFC card based on one or both of (i) an amplitude difference between an amplitude of the first response and an amplitude of the second response, relative to an amplitude threshold; and (ii) a phase difference between a phase of the first response and a phase of the second response, relative to a phase threshold.

According to a third aspect of the disclosure, we provide a non-transient computer usable media comprising computer program code configured to provide for:
transmitting, by a transmitter, a first polling loop comprising plural polling commands with a first field strength;
receiving, by a receiver, a first response in reply to the first polling loop from a near field communication, NFC, responder;
transmitting, by the transmitter, a second polling loop comprising plural polling commands, wherein the second polling loop is transmitted with a second field strength different to the first field strength for at least a part of a duration of the second polling loop;
receiving, by a receiver, a second response in reply to the at least second polling loop from the NFC responder; and
determining, by a controller, whether the NFC responder comprises a physical NFC card or an electronic device emulating an NFC card based on one or both of (i) an amplitude difference between an amplitude of the first response and an amplitude of the second response, relative to an amplitude threshold; and (ii) a phase difference between a phase of the first response and a phase of the second response, relative to a phase threshold.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a device configured to determine the presence of a physical NFC card or an emulated NFC card;
Figure 2 shows an example signal plot illustrating different responses from a physical NFC card and an emulated NFC card for an ATQA reply;
Figure 3 shows a second example signal plot illustrating different responses from a physical NFC card and an emulated NFC card for an anti-collision reply;
Figure 4 shows an example signal plot illustrating the phase of I and Q responses from a physical NFC card;
Figure 5 shows an example signal plot illustrating the phase of I and Q responses from an emulated NFC card; and
Figure 6 shows an example flowchart illustrating a method of the disclosure; and
Figure 7 shows a computer readable medium.

### Detailed Description

Wireless charging provides convenience for a user. For example, the user may place their mobile device, such as a smartphone, in a charging area and their mobile device will be charged by electromagnetic induction. It is known for wireless chargers to perform foreign object detection to prevent the energy provided by the wireless charging coupling with an unintended object. It is common for a user to carry their smartphone in a wallet along with near field communication capable cards, such as bank cards. Such NFC cards include a coil that can electromagnetically couple with the coils of the wireless charger and receive sufficient energy to damage or destroy the NFC card. Accordingly, it can be advantageous for a wireless charger to detect the presence of NFC cards in the charging area. However, it is also common for mobile devices, such as smartphones, to have NFC communication capabilities to generate a virtual NFC card to emulate a physical NFC card, such as for mobile phone-based payments. Accordingly, controlling the provision of wireless charging based on detection of an NFC card by communicating with the NFC card is not straightforward.

We disclose a device that is configured to distinguish between a physical NFC card and an electronic device emulating an NFC card based on NFC communication. It will be appreciated that the NFC communication is defined in standard ISO/IEC FDIS 14443-3:2000(E). The device may be part of a wireless charger to control the provision of wireless charging by the wireless charger. However, it will be appreciated that a device configured to distinguish between a physical NFC card and an electronic device emulating an NFC card may have wider application.

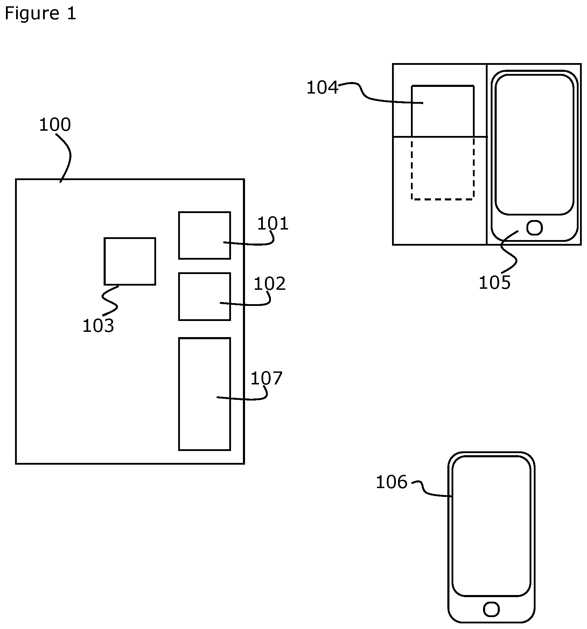

Figure 1 shows a device 100 comprising a transmitter 101 for transmitting NFC signals, a receiver 102 for receiving any replies from NFC cards, tags or devices in proximity to the device 100 and a controller 103 for processing the replies to determine the presence of a physical NFC card 104 and/or an electronic device 105, 106 emulating an NFC card. The electronic device 105, 106 typically comprises a smartphone, although any other battery powered electronic device with NFC capability may be detected.

In the present example, the device 100 comprises a wireless charger and therefore includes wireless charging circuitry 107. The wireless charging circuitry 107 is configured to be controlled by the controller 103 based on the determination of whether or not the physical NFC card 104 is present and, optionally, whether there is determination of the presence of an electronic device 105, 106 that has virtual NFC card functionality for emulating a physical NFC card.

Figure 1 illustrates two common configurations of physical/emulated NFC cards that may be important for a wireless charger to distinguish between. Figure 1 shows the electronic device 105 in a wallet with the physical NFC card 104 (although the physical NFC card may simply be proximal to the electronic device rather than in a wallet). Accordingly, it is advantageous to detect the presence of the physical NFC card and prevent wireless charging to this configuration. Figure 1 also shows a second configured comprising only the electronic device 106, although the electronic device also has NFC capability for emulating a physical NFC card for mobile payments. The provision of wireless charging to this configuration is desirable as there is no physical NFC card that may be damaged.

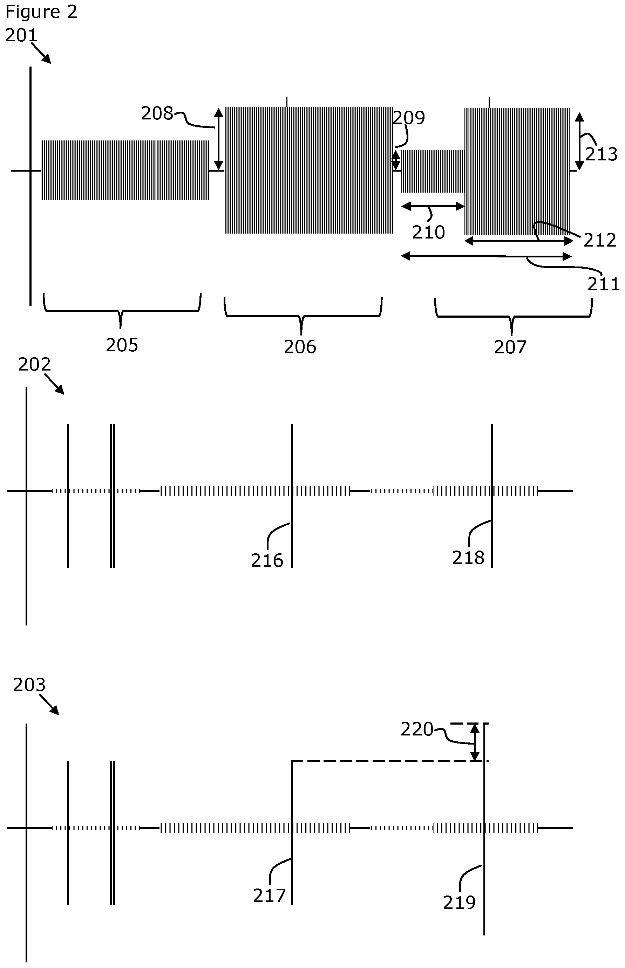

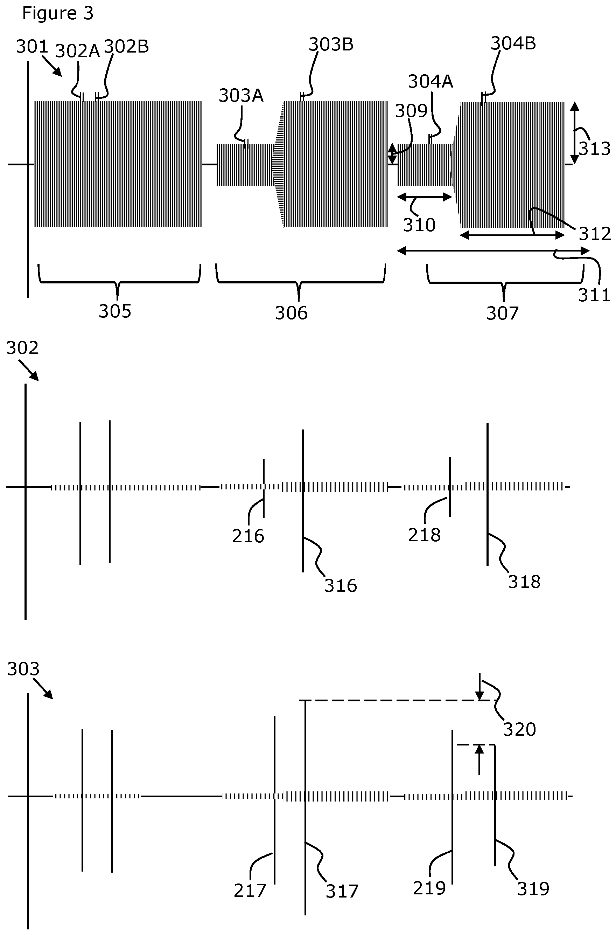

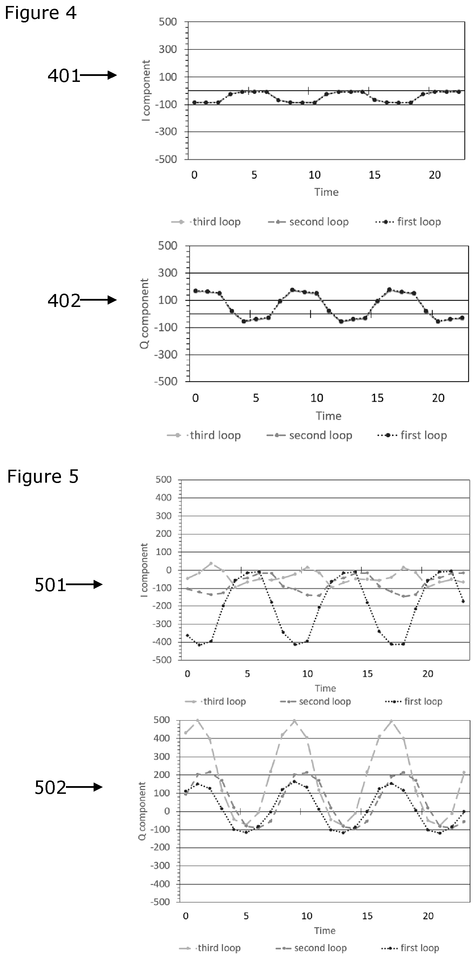

Figure 2 illustrates an example of the signals transmitted by the transmitter 101 in plot 201 and signals which may be received in response by the receiver 102 for a physical NFC card in plot 202 and a virtual NFC card in plot 203. Further examples are illustrated in Figures 3 and 4.

However, to summarise the operation of the device 100, the transmitter 101 is configured to transmit a plurality of blocks of signals 205, 206, 207. In the plot 201, the blocks of signals comprise an ABFV polling block 205, a first polling loop 206 and a second polling loop 207. The ABFV polling block 205 is an NFC block to identify different NFC card types, namely Type A, Type B, Type F and Type V. The polling loops may be in accordance with a protocol defining NFC communication. The polling loops 206, 207 comprising plural polling commands, as will be familiar to those skilled in the art of NFC. The polling commands may include a Wake-Up command instructing any nearby NFC tags, cards or devices to wake up and reply, known as a "WUPA" command in the art.

The device 100 is configured such that the first polling loop 206 is transmitted with a first field strength 208. The device is configured such that the second polling loop 207 is transmitted with a second field strength 209 different to the first field strength 208 for at least a part 210 of a duration 211 of the second polling loop 207. In the present example the second polling loop is transmitted with the second field strength for at least an initial part of the duration 211 of the second polling loop, although other field strength distributions are possible. In the present example, the initial part 210 is configured to extend to at least after an electronic device with NFC functionality will have completed its sampling phase for a Dynamic Load Modulation Amplitude, DLMA, process. As will be known to those skilled in the art, DLMA is provided to optimize the load modulation amplitude based on the external field strength for electronic devices having NFC functionality. DLMA is not used in physical NFC cards.

The receiver 102 is configured to receive a first response 216, 217 in reply to the first polling loop 206 from a near field communication, NFC, responder, whether that be a physical NFC card 104 or electronic device 105, 106 emulating a physical NFC card. The receiver 102 is also configured to receive a second response 218, 219 in reply to the second polling loop 207 (or any further polling loops) from the NFC responder 104, 105, 106.

In this first example, the first response 216, 217 and the second response 218, 219 comprise an Answer to Request (or Answer To Request A), ATQA, signal, as will be familiar to those skilled in the art of NFC. However, in other examples, the first and second response may be an anti-collision signal generated as part of an anti-collision algorithm, as will be familiar to those skilled in the art of NFC.

The controller 103 is configured to determine whether the NFC responder comprises a physical NFC card or an electronic device emulating an NFC card by comparing the amplitude of the first and the second response 216 to 218, and 217 to 219, or, more generally, by comparing any two or more of more than two responses.

Plot 202 shows the response from a physical card. Considering plot 202, the ATQA response 218 is received after the initial part 210 when, in this example, the field strength has returned to amplitude 213, similar to or the same as amplitude 208 of the first polling loop. The amplitude of the ATQA response 216 to the first polling loop and the amplitude of the ATQA response 218 to the second polling loop are substantially equal in amplitude. In particular, the controller 103 is configured to compare the amplitude difference between response 216 and the response 218 to an amplitude threshold (not shown). In this example the difference is less than the amplitude threshold. It has been found that this is indicative of the NFC responder being a physical NFC card 104. The amplitude threshold may be used to account for noise or expected variations.

Considering plot 203 which shows the response from an electronic device emulating an NFC card, the amplitude of the ATQA response 217 to the first polling loop is of a lower amplitude than the amplitude of the ATQA response 219 to the second polling loop. The ATQA response 219 is received after the field strength has return to the amplitude 213 after the lower amplitude 209 of the initial part 210. Again, the controller 103 is configured to compare the amplitude difference 220 between response 217 and the response 219 to an amplitude threshold (not shown). In this example the difference is more than the amplitude threshold. It has been found that this is indicative of the NFC responder being an electronic device emulating an NFC card 105, 106.

To provide further detail, the electronic device 105, 106 performs a Dynamic Load Modulation Amplitude, DLMA, process. The DLMA process, in summary, causes the generation of a higher-powered response when the field strength of the polling loop is low and a lower-powered response when the field strength of the polling loop is high. The lower amplitude part 210 of the second polling loop 207 causes the electronic device to conclude that the field strength of second polling loop 207 is weak and it should therefore reply with a higher-powered response (with greater amplitude as represented in Figure 2). The second polling loop 207 includes a portion 212 of increased field strength 213 after the portion 210 and before the second response 219 is received. Nevertheless, because the DLMA process occurring in the electronic device has concluded, despite the field strength increasing after part 210, the electronic device 105, 106 provides a response with greater amplitude. The field strength 213 of the portion 212 may be the same or greater than the first field strength 208. To the contrary, a reply from the physical NFC card 104 will be related to the field strength 213 being provided at the time of the response 218, because the field of the polling loop 207 provides the physical NFC card with its energy to generate the reply whereas the electronic device generates the response 219 using its own battery power. Thus, the duration of the part 210 is configured to be greater than an expected duration of a sampling phase of a DLMA process. Put another way, the receiver is configured to receive the second response after the initial part 210 and during a remaining part of the second polling loop in which the field strength is similar, such as with a predetermined threshold of, the field strength of the first polling loop.

Figure 3 shows a further embodiment in which the first response and the second response comprises an anti-collision signal. Thus, Figure 3 shows the ATQA responses labelled as 216-219. However, in this example, the first and second responses that are used by the controller 103 comprise the anti-collision responses 316, 317, 318, 319.

The transmitter 101 is configured to transmit a plurality of blocks of signals 305, 306, 307. In the plot 301, the blocks of signals comprise an initial (also called the third polling loop for consistency with other examples despite being shown before the first and second loops) polling loop 305, a first polling loop 306 and a second polling loop 307. The polling loops may be in accordance with a protocol defining NFC communication. The polling loops 305, 306, 307 comprising plural polling commands, as will be familiar to those skilled in the art of NFC. The polling commands may include a Wake-Up command instructing any nearby NFC tags, cards or devices to wake up and reply, known as a WUPA command in the art.

Accordingly, in polling loop 305 there comprises a WUPA, wake up command 302A to which the NFC responder replies (a second line adjacent to line 302A is shown to represent the response, which is shown more clearly in plots 302, 303) as well as an anticollision command 302B to which the NFC responder replies (a second line adjacent to line 302B is shown to represent the response, which is shown more clearly in plots 302, 303).

In polling loop 306 there comprises a WUPA, wake up command 303A to which the NFC responder replies (a second line adjacent to line 303A is shown to represent the response 216 or 217 shown more clearly in plots 302, 303) as well as an anticollision command 303B to which the NFC responder replies (a second line adjacent to line 303B is shown to represent the response 316 or 317 shown more clearly in plots 302, 303).

In polling loop 307 there comprises a WUPA, wake up command 304A to which the NFC responder replies (a second line adjacent to line 304A is shown to represent the response 218 or 219 shown more clearly in plots 302, 303) as well as an anticollision command 304B to which the NFC responder replies (a second line adjacent to line 304B is shown to represent the response 318 or 319 shown more clearly in plots 302, 303).

In the present example, in the polling loops 306 and/or 307 the ATQA command is provided in the part 310 of the polling loop that is provided with the different, second field strength 309 to the part 312 of the polling loop that includes the anticollision command 303B, 304B.

Considering plot 302 which shows the response from a physical card, the amplitude of the anti-collision response 316 to the first polling loop 306 and the amplitude of the anti-collision response 318 to the second polling loop 307 are substantially equal in amplitude. In particular, the controller 103 is configured to compare the amplitude difference between response 316 and response 318 to the amplitude threshold (which may be set at a level different to or the same as that used for the ATQA signal response). In this example the difference 320 between the amplitudes of responses 316 and 318 is less than the amplitude threshold. It has been found that this is indicative of the NFC responder being a physical NFC card 104. The amplitude threshold may be used to account for noise or expected variations.

Considering plot 303 which shows the response from an electronic device emulating an NFC card, the amplitude of the anti-collision response 317 to the first polling loop is of a higher amplitude than the amplitude of the anti-collision response 319 to the second polling loop. In particular, the controller 103 is configured to compare the amplitude difference 320 between response 317 and the response 319 to an amplitude threshold (not shown). In this example the difference is more than the amplitude threshold. It has been found that this is indicative of the NFC responder being an electronic device emulating an NFC card 105, 106.

It will be appreciated that the mobile phone will provide the response 316, 317, 318, 319 as well as an NFC 13.56 MHz reader signal. The signal(s) received by the receiver 102 will be a sum of the response and the reader signal. As the receiver 102 is receiving a summation of signals and the responses 216-219 and 316-319 may be issued by the electronic device at different times, the summation may result in superposition or partial cancellation of the signals. Accordingly, it has been realised that changes (rather than the change always being an amplitude increase, or an amplitude decrease) is indicative of the NFC responder being an electronic device.

It has also been recognised that differences in the phase of the responses can also be indicative of whether the NFC responder is an electronic device emulating an NFC card or a physical NFC card. The device 100 may use one or both of differences in amplitude and differences in phase to distinguish between physical NFC cards and emulated NFC cards.

Figures 4 and 5 illustrate the phase differences used to distinguish between NFC responders.

Figure 4 shows a first plot 401 of the I components of first, second and third responses to respective polling loops (or commands thereof).

Figure 4 also shows a second plot 402 of the Q components of first, second and third responses to respective polling loops (or commands thereof).

In the present examples, the phase may be measured relative to a predetermined reference point. However, as an example, for each set of signals received in response to a polling loop, the first step may be to obtain the I component and Q component data for the signals received by the receiver 102 for the particular polling loop. The second step may be to solve for amplitude, wherein amplitude= sqrt (I*I + Q*Q). The third step may be to find the index (i.e. the time, wherein the index is used to identify values in the time ordered data) where the maximum value of amplitude or amplitude peaks are located. For example, there may be multiple peaks. Let us assume for explanation that the peaks were found at indices (or time positions) one and nine. The fourth step may be to calculate the phase values corresponding to indices one and nine. Phase[at index one] = arctan(Q component [at index one] / I component [at index one]), and, likewise Phase[at index nine] = arctan(Q component [at index nine] / I component [at index nine]. Therefore, the current phase value in this loop is equal to the average of Phase [at index one] and Phase [at index nine]. To summarise, a feature of the data is identified (e.g. a peak) based on predetermined feature criteria in the received data and the phase is calculated from the I and Q values at the identified feature.

In the example of Figure 4, the NFC responder is a physical NFC card. It has been found that the phase of the three responses are substantially consistent across the polling loops. Accordingly, the plot lines overlap.

As before, there may be expected variations in the phase and therefore a predetermined phase threshold may be used by the controller to account for expected variations. Thus, the controller 103 may be configured to compare the difference in phase between any two responses to the phase threshold. If the difference is less than the phase threshold, then the controller 103 may be configured to determine that the NFC responder is a physical NFC card.

Figure 5 shows a first plot 501 of the I components of first, second and third responses to respective polling loops (or commands thereof).

Figure 5 also shows a second plot 502 of the Q components of first, second and third responses to respective polling loops (or commands thereof).

In the example of Figure 5, the NFC responder is an electronic device emulating an NFC card. It has been found that with such an NFC responder, the phase of the three responses are not consistent across the respective three polling loops.

Thus, the controller 103 may be configured to compare the difference in phase between any two responses to the phase threshold. If the difference is greater than the phase threshold, then the controller 103 may be configured to determine that the NFC responder is an electronic device emulating an NFC card.

It will be appreciated that, in any embodiment, if the presence of a physical NFC card is what is important for controlling (shutting down or prevent the activation of) the wireless charger, then the controller 103 may be configured to provide an output only when there is a determination that the NFC responder is a physical NFC card.

**In** some examples, the phase difference is more evident in one of the In-phase component of the response or the Quadrature component of the responses. Accordingly, one or both of the receiver 102 and the controller 103 may be configured to determine In-phase, I, and Quadrature, Q, components of the first response and I and Q components of the second response as well as any further response.

Accordingly, the controller 103 may be configured to determine a first phase angle based on one or both of the I and Q components of the first response and a second phase angle based on one or both of the I and Q components of the second response. The phase difference is then based on the difference between the first phase angle and the second phase angle derived from either of the I and Q components.

**In** any of the examples, the transmitter 101 may be configured to transmit a wake-up command, comprising instructions for a NFC responder to reply, as part of the polling loops. **In** particular, the wake-up command may be transmitted in the latter part 212, 312 of the second polling loop 207, 307 and the receiver 102 is configured to receive the second response following said wake-up command.

**In** any of the example, the operation of the controller 103 may be provided during initialization of the wireless charger and/or during wireless charging. The controller 103 is configured to inhibit the activation of, or deactivate, the wireless charging circuitry based on the determination that the NFC responder comprises the physical NFC card. However, if no physical NFC card is determined to be present, the controller may provide for wireless charging to continue or commence.

Further the controller 103 may be configured to activate, or not prevent the activation of, the wireless charging circuitry 107 based on the determination that the NFC responder comprises the electronic device 105, 106 emulating an NFC card.

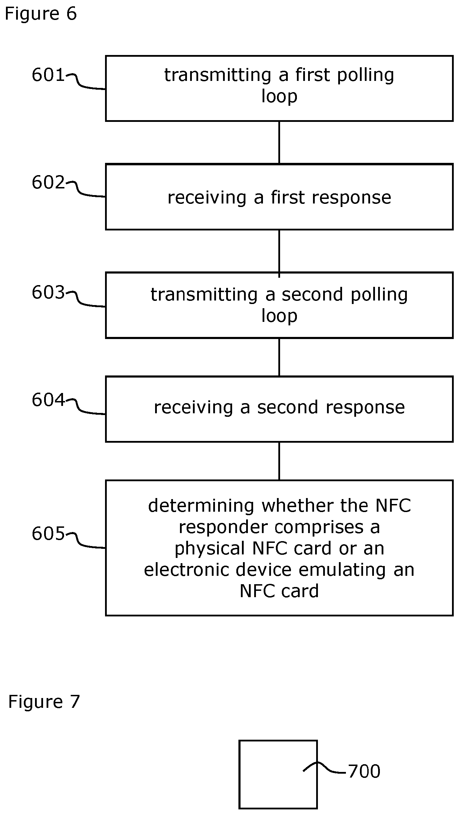

Figure 6 shows an example method of operating the device 100, such as a wireless charger. The method comprises:
transmitting 601, by a transmitter, a first polling loop comprising plural polling commands with a first field strength;
receiving 602, by a receiver, a first response in reply to the first polling loop from a near field communication, NFC, responder;
transmitting 603, by the transmitter, a second polling loop comprising plural polling commands, wherein the second polling loop is transmitted with a second field strength different to the first field strength for at least a part of a duration of the second polling loop;
receiving 604, by a receiver, a second response in reply to the at least second polling loop from the NFC responder; and
determining 605, by a controller, whether the NFC responder comprises a physical NFC card or an electronic device emulating an NFC card based on one or both of (i) an amplitude difference between an amplitude of the first response and an amplitude of the second response, relative to an amplitude threshold; and (ii) a phase difference between a phase of the first response and a phase of the second response, relative to a phase threshold.

Figure 7 shows a non-transient computer usable media 700 comprising computer program code configured to provide for:
transmitting, by a transmitter, a first polling loop comprising plural polling commands with a first field strength;
receiving, by a receiver, a first response in reply to the first polling loop from a near field communication, NFC, responder;
transmitting, by the transmitter, a second polling loop comprising plural polling commands, wherein the second polling loop is transmitted with a second field strength different to the first field strength for at least a part of a duration of the second polling loop;
receiving, by a receiver, a second response in reply to the at least second polling loop from the NFC responder; and
determining, by a controller, whether the NFC responder comprises a physical NFC card or an electronic device emulating an NFC card based on one or both of (i) an amplitude difference between an amplitude of the first response and an amplitude of the second response, relative to an amplitude threshold; and (ii) a phase difference between a phase of the first response and a phase of the second response, relative to a phase threshold.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A device comprising:
a transmitter configured to transmit a first polling loop comprising plural polling commands with a first field strength and at least a second polling loop comprising plural polling commands, wherein the second polling loop is transmitted with a second field strength different to the first field strength for at least a part of a duration of the second polling loop;
a receiver configured to receive a first response in reply to the first polling loop from a near field communication, NFC, responder and a second response in reply to the at least second polling loop from the NFC responder; and
a controller configured to:
based on one or both of: (i) an amplitude difference between an amplitude of the first response and an amplitude of the second response, relative to an amplitude threshold; and (ii) a phase difference between a phase of the first response and a phase of the second response, relative to a phase threshold, determine whether the NFC responder comprises a physical NFC card or an electronic device emulating an NFC card.

2. The device of claim 1, wherein the controller is configured to,
based on the amplitude difference between the amplitude of the first response and the amplitude of the second response being greater than the amplitude threshold, determine that the NFC responder comprises the electronic device emulating an NFC card; and
based on the amplitude difference between the amplitude of the first response and the amplitude of the second response being less than the amplitude threshold, determine that the NFC responder comprises the physical NFC card.

3. The device of claim 1 or claim 2, wherein the controller is configured to,
based on the phase difference between the phase of the first response and the phase of the second response being greater than the phase threshold, determine that the NFC responder comprises the electronic device emulating an NFC card; and
based on the phase difference between the phase of the first response and the phase of the second response being less than the phase threshold, determine that the NFC responder comprises the physical NFC card.

4. The device of any preceding claim, wherein the device comprises wireless charging circuitry and wherein the wireless charging circuitry is controlled based on the determination of whether the NFC responder comprises the physical NFC card or the electronic device emulating an NFC card.

5. The device of any preceding claim, wherein the first response and the second response comprise an Answer to Request, ATQA, signal.

6. The device of any one of claims 1 to 4, wherein the first response and the second response comprise an anti-collision signal generated as part of an anti-collision algorithm.

7. The device of any preceding claim wherein the receiver is configured to determine In-phase, I, and Quadrature, Q, components of the first response and I and Q components of the second response, and
wherein the controller is configured to determine a first phase angle based on one of the I and Q components of the first response and a second phase angle based on the one of the I and Q components of the second response, wherein the phase difference is based the difference between the first phase angle and the second phase angle.

8. The device of any preceding claim, wherein the transmitter is configured to transmit a third polling loop comprising plural polling commands with a third field strength, wherein the third polling loop is transmitted with a third field strength different to the first field strength for at least a part of a duration of the third polling loop; and
wherein the determination of whether the NFC responder comprises a physical NFC card or an electronic device emulating an NFC card is further based on one or both of (i) an amplitude difference between an amplitude of the first response and an amplitude of the second response and/or third response, relative to an amplitude threshold; and (ii) a phase difference between a phase of the first response and a phase of the second response and/or third response, relative to a phase threshold.

9. The device of any preceding claim, wherein the second polling loop is transmitted with the second field strength different to the first field strength for at least an initial part of the duration of the second polling loop.

10. The device of any claim 9, wherein the transmitter is configured to transmit the second polling loop having the second field strength for the initial part of the second polling loop and a greater field strength for a latter part of the second polling loop.

11. The device of claim 10, wherein the receiver is configured to receive at least the second response during the latter part of the second polling loop.

12. The device of claim 4, wherein the controller is configured to inhibit the activation of or deactivate the wireless charging circuitry based on the determination that the NFC responder comprises the physical NFC card.

13. The device of claim 4, wherein one or both of:
the controller is configured to inhibit the activation of or deactivate the wireless charging circuitry based on the determination that the NFC responder comprises the physical NFC card; or
the controller is configured to activate, or not prevent the activation of, the wireless charging circuitry based on the determination that the NFC responder comprises the electronic device emulating an NFC card.

14. A method of operating a device comprising:
transmitting, by a transmitter, a first polling loop comprising plural polling commands with a first field strength;
receiving, by a receiver, a first response in reply to the first polling loop from a near field communication, NFC, responder;
transmitting, by the transmitter, a second polling loop comprising plural polling commands, wherein the second polling loop is transmitted with a second field strength different to the first field strength for at least a part of a duration of the second polling loop;
receiving, by a receiver, a second response in reply to the at least second polling loop from the NFC responder; and
determining, by a controller, whether the NFC responder comprises a physical NFC card or an electronic device emulating an NFC card based on one or both of (i) an amplitude difference between an amplitude of the first response and an amplitude of the second response, relative to an amplitude threshold; and (ii) a phase difference between a phase of the first response and a phase of the second response, relative to a phase threshold.

15. A non-transient computer usable media comprising computer program code configured to provide for:
transmitting, by a transmitter, a first polling loop comprising plural polling commands with a first field strength;
receiving, by a receiver, a first response in reply to the first polling loop from a near field communication, NFC, responder;
transmitting, by the transmitter, a second polling loop comprising plural polling commands, wherein the second polling loop is transmitted with a second field strength different to the first field strength for at least a part of a duration of the second polling loop;
receiving, by a receiver, a second response in reply to the at least second polling loop from the NFC responder; and
determining, by a controller, whether the NFC responder comprises a physical NFC card or an electronic device emulating an NFC card based on one or both of (i) an amplitude difference between an amplitude of the first response and an amplitude of the second response, relative to an amplitude threshold; and (ii) a phase difference between a phase of the first response and a phase of the second response, relative to a phase threshold.
